# EUROPÄISCHE PATENTSCHRIFT

(11) **EP 3 096 133 B1**
(45) Veröffentlichungstag und Bekanntmachung des Hinweises auf die Patenterteilung: **13.09.2017**
(21) Anmeldenummer: 16168236.4
(22) Anmeldetag: 04.05.2016
(51) Int. Cl.: G01N 27/18, G01N 30/66, G01N 25/18

(54) **WÄRMELEITFÄHIGKEITSDETEKTOR**
THERMAL CONDUCTIVITY DETECTOR
DETECTEUR DE CONDUCTIVITE THERMIQUE

(30) Priorität: 20.05.2015 DE 102015209200
(43) Veröffentlichungstag der Anmeldung: 23.11.2016
(73) Patentinhaber: Siemens Aktiengesellschaft, 80333 München (DE)
(72) Erfinder: Gellert, Udo, 76756 Bellheim (DE)

(56) Entgegenhaltungen:
- WO-A1-2009/095494
- DE-T2- 68 928 739
- JP-A- 2013 228 346

## Beschreibung

Die Erfindung betrifft einen Wärmeleitfähigkeitsdetektor mit einem von einem Fluid durchströmbaren Kanal und mit einem durch einen Heizstrom auf Arbeitstemperatur aufheizbaren Heizelement aus dotiertem Silizium, das in der Mitte und sich in Längsrichtung des Kanals erstreckend von einem Fluid umströmbar angeordnet und an einem den Kanal durchquerenden Träger gehalten ist, welcher beiderseits der Verbindung mit dem Heizelement jeweils einen Trägerarm aufweist.

Aus der WO 2009/095494 A1 ist ein derartiger Wärmeleitfähigkeitsdetektor bekannt, bei dem ein elektrisch beheizbarer Heizfaden in der Mitte und in Längsrichtung eines Kanals von einem Fluid umströmbar gelagert ist und dazu an seinen beiden Enden an zwei den Kanal durchquerenden elektrisch leitenden Trägern gehalten ist. Um eine hohe Standzeit und Inertheit gegenüber chemisch aggressiven Gasgemischen zu erhalten, bestehen der Heizfaden und die Träger aus dotiertem Silizium. Das dotierte Silizium kann unter Zwischenlage einer Isolierschicht aus Siliziumdioxid auf einem Siliziumsubstrat aufgebracht werden, wobei in Ätzprozessen durch Strukturieren des Siliziumsubstrats, der Siliziumdioxid-Schicht und der Schicht aus dem dotierten Silizium die Träger und der Heizfaden gebildet und die Rinne in der Trägerplatte ausgeformt werden.

Aus der EP 1 381 854 B1 sind auch gleichartige Wärmeleitfähigkeitsdetektoren mit metallenen Heizfäden, insbesondere aus Gold und/oder Platin bekannt. Der bei Umgebungstemperatur unter Zug stehende Heizfaden kann bei Arbeitstemperaturen zwischen 100 °C und 200 °C oder höher aufgrund seiner Wärmeausdehnung erschlaffen, so dass das den Kanal durchströmende Fluid den Heizfaden zu Schwingungen anregen kann, die das Detektorrauschen des Wärmeleitfähigkeitsdetektors erhöhen und damit die Nachweisgrenze herabsetzen und die auch zu einem vorzeitigen Bruch des sehr dünnen Heizfadens führen können.

Um einem Erschlaffen des Heizfadens bei Arbeitstemperatur entgegenzuwirken, ist mindestens einer der beiden Träger derart ausgebildet, dass sein Abstand zu dem anderen Träger im Bereich der Kanalmitte größer ist als im Bereich der Kanalwandung.

Es ist auch bekannt, den metallenen Heizfaden als Film oder Schicht in oder auf einem tragenden Material auszubilden.

So offenbart die US 4 682 503 A ist einen Wärmeleitfähigkeitsdetektor, bei dem der Heizfaden als Metallfilm in einem Balken eingebettet ist, der sich über einer Rinne in deren Längsrichtung erstreckt und an beiden Enden z. B. an quer über die Rinne verlaufenden Trägern gehalten ist. Der Balken und die Träger bestehen aus einem dielektischen Material, z. B. Siliziumnitrid, das als Schicht auf einem Siliziumsubstrat ausgebildet ist, wobei der Balken mit den Trägern und die Rinne durch Ätzen in der Siliziumnitrid-Schicht bzw. dem Siliziumsubstrat ausgeformt worden sind. Der vorzugsweise aus einer Eisen-Nickel-Legierung bestehende Metallfilm kann gerade von einem Ende des Balkens zu dem anderen oder als Schleife zu dem einen Ende wieder zurück geführt sein.

Aus der JP 2013 228346 A ist ein als Thermoelement arbeitender Wärmeleitfähigkeitsdetektor bekannt, bei dem ein Heizfaden als Metallfilm auf einem Balken ausgebildet ist, der einseitig an einem Trägersubstrat angeformt ist und in eine Aussparung in dem Trägersubstrat hineinragt. Der Balken und das Trägersubstrat bestehen aus dotiertem Silizium und tragen auf einer Seite unter Zwischenlage einer Isolierschicht einen Metallfilm, der auf dem Balken den Heizfaden bildet. Der Heizfaden ist an dem freien Ende des Balkens durch die Isolierschicht hindurch unter Bildung der heißen Messstelle mit dem dotierten Silizium kontaktiert und an dem anderen Ende der Balkens zu einem ersten Kontaktpad auf dem Trägersubstrat hin verlängert. Das als Stromzuführung dienende dotierte Silizium ist auf dem Trägersubstrat mit einem zweiten Kontaktpad unter Bildung der kalten Messstelle verbunden. Aus der US 4 594 889 A ist ein nach dem Prinzip eines Hitzdraht-Anemometers arbeitender Luftmassensensor bekannt, bei dem in einem plattenförmigen Siliziumsubstrat zwei parallele Rechtecköffnungen ausgebildet sind, zwischen denen das Silizium ein drahtförmiges Element bildet. Das Siliziumsubstrat ist mit einer Siliziumdioxid-Schicht überzogen, auf der im Bereich des drahtförmigen Elements eine den Heizfaden bildende Metallschicht, z. B. aus Platin, ausgebildet ist. An den beiden Enden des drahtförmigen Elements erstreckt sich die Metallschicht auf das Siliziumsubstrat und bildet dort Kontaktflächen.

Verglichen mit der mechanischen Stabilität eines Goldfadens ist die von Silizium wesentlich höher. Da Silizium jedoch relativ spröde ist und, was einen Vorteil darstellt, ein Heizfaden aus dotiertem Silizium mit einer höheren Arbeitstemperatur betrieben werden kann, stellt auch bei einem solchen Heizfaden die thermische Ausdehnung ein Problem dar.

Gemäß der Erfindung wird dieses Problem dadurch gelöst, dass bei dem Wärmeleitfähigkeitsdetektor der eingangs angegebenen Art das Heizelement von einem Balken gebildet ist, der einseitig an dem Träger gehalten ist, und dass der Balken und der Träger auf einer Seite unter Zwischenlage einer Isolierschicht eine an den Enden der Trägerarme in Kontaktflächen zur Stromzuführung endende Metallschicht tragen, die in einem Bereich eines der Trägerarme unterbrochen ist und dort an der zu dem Trägerarm nahen Seite des Balkens sowie an dem freien Ende des Balkens jeweils durch die Isolierschicht hindurch mit dem dotierten Silizium kontaktiert ist.

Vorteilhafte Weiterbildungen des Wärmeleitfähigkeitsdetektors sind in den Unteransprüchen angegeben.

Die mechanische Stabilität von Silizium erlaubt es, den bekannten beidseitig eingespannten metallenen Heizfaden durch einen extrem dünnen Kragbalken aus dotiertem Silizium zu ersetzen. Durch seine einseitige Halterung ist der Balken bei Wärmeausdehnung keiner mechanischen Belastung ausgesetzt. Das dotierte Silizium bildet aufgrund seines vergleichsweise hohen elektrischen Widerstandes ein Heizelement bzw. den Heizfaden, der an seinen Enden, nämlich einmal an dem freien Ende des Balkens und einmal im Bereich eines der Trägerarme mit der zur Stromzuführung dienende Metallschicht kontaktiert ist.

Der erfindungsgemäße Wärmeleitfähigkeitsdetektor wird in vorteilhafter Weise mikromechanisch mit vorzugsweise Siliziumdioxid oder Siliziumnitrid für die Isolierschicht und vorzugsweise Gold oder Platin für die Metallschicht hergestellt.

Um die mechanischen Stabilität zu erhöhen und unterschiedliche elektrische Widerstandswerte vorsehen zu können, weist der erfindungsgemäße Wärmeleitfähigkeitsdetektor vorzugsweise mindestens einen weiteren identisch aufgebauten und gehaltenen Balken auf, der in Längsrichtung des Kanals unmittelbar vor oder hinter dem einen Balken angeordnet ist. Auf diese Weise wird das Heizelement bzw. der Heizfaden in mehrere Segmente unterteilt, die für sich jeweils mechanisch stabiler sind, in Bezug auf das sie umströmende Fluid aber wie ein einzelner durchgehender Heizfaden wirken. Bei elektrischer Serienschaltung der Heizfaden-Segmente entspricht ihr Gesamtwiderstand dem Widerstand des vergleichbaren einzelnen durchgehenden Heizfadens, bei Parallelschaltung einem Bruchteil des Widerstands des einzelnen Heizfadens.

Um zu erreichen, dass sich der Wärmeleitfähigkeitsdetektor in jedem Fall unabhängig von der Einbaulage in eine das Fluid führende Leitung verhält, ist bei einer geraden Anzahl von Balken vorzugsweise deren Anordnung in Bezug auf eine quer zu dem Kanal verlaufende Achse spiegelsymmetrisch.

Zur weiteren Erläuterung der Erfindung im Folgenden auf die Figuren der Zeichnung Bezug genommen; im Einzelnen zeigen: wobei
- Figur 1: ein erstes Ausführungsbeispiel des erfindungsgemäßen Wärmeleitfähigkeitsdetektors im Längsschnitt (I-I'),
- Figur 2: denselben Wärmeleitfähigkeitsdetektor im Querschnitt (II-II'),
- Figur 3: beispielhaft einen Längsschnitt III-III' durch einen Teil des Trägerarms und den sich daran anschließenden Balken,
- Figur 4: ein zweites Ausführungsbeispiel des erfindungsgemäßen Wärmeleitfähigkeitsdetektors mit drei Balken und
- Figur 5: ein viertes Ausführungsbeispiel des erfindungsgemäßen Wärmeleitfähigkeitsdetektors mit vier Balken.

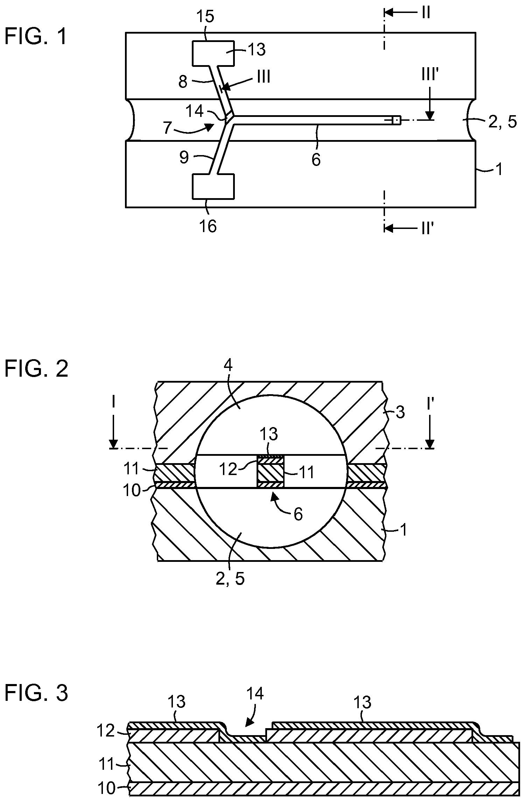

Wie die Figuren 1 und 2 zeigen, liegt auf einer Trägerplatte 1 mit einer darin enthaltenen Rinne 2 eine Abdeckplatte 3 mit einer weiteren Rinne 4 derart auf, dass beide Rinnen 2 und 4 zusammen einen Kanal 5 mit hier kreisrundem Querschnitt bilden. In der Mitte des Kanals 5 erstreckt sich in dessen Längsrichtung ein Balken 6, der an einem Ende an einem den Kanal 5 durchquerenden Träger 7 gehalten ist. Der Träger 7 weist beiderseits der Verbindung mit dem Balken 6 jeweils einen Trägerarm 8, 9 auf.

Figur 3 zeigt einen Längsschnitt III-III' durch einen Teil des Trägerarms 8 und den sich daran anschließenden Balken 6.

Zur mikromechanischen Herstellung des Wärmeleitfähigkeitsdetektors wird zunächst die Trägerplatte 1 aus einem Siliziumsubstrat gebildet, auf dem eine Isolierschicht 10 aus Siliziumdioxid aufgebracht wird. Auf der Siliziumdioxid-Schicht 10 wird anschließend eine Schicht 11 aus dotiertem Silizium aufgebracht. In Ätzprozessen werden durch Strukturieren des Siliziumsubstrats, der Siliziumdioxid-Schicht 10 und der Schicht aus dotiertem Silizium der Träger 7 mit dem Balken 6 gebildet und die Rinne 2 in der Trägerplatte 1 ausgeformt. Bei der Ausbildung des Trägers 7 und des Balkens 6 kann im Inneren der Rinne 2 auf ein Verbleiben der Siliziumdioxid-Schicht 10 verzichtet werden.

Durch Oxidieren erhalten der Träger 7 und der Balken 6 eine gegenüber Schwefelwasserstoff resistente Oberfläche (Isolierschicht) 12 aus Siliziumdioxid. Auf ihrer Oberseite sind der Balken 6 und der Träger 7 mit einer Metallschicht 13 versehen, die im Bereich des Trägerarm 8 an der mit 14 bezeichneten Stelle unterbrochen ist und dort an der zu dem Trägerarm 8 nahen Seite durch die Isolierschicht 12 hindurch mit dem dotiertem Silizium 11 kontaktiert ist. An dem freien Ende des Balkens 6 ist die Metallschicht 13 ebenfalls durch die Isolierschicht 12 hindurch mit dem dotierten Silizium 11 kontaktiert.

Schließlich werden die Trägerplatte 1 und die Abdeckplatte 3 zusammengefügt, wobei die in ihnen ausgeformten Rinnen 2 und 4 den Kanal 5 bilden.

Die Trägerarme 8, 9 enden in Kontaktflächen 15, 16, über die der Wärmeleitfähigkeitsdetektor in eine Messbrücke geschaltet werden kann. Dabei fließt ein Heizstrom von der Kontaktfläche 15 über die Metallschicht 13 des Trägerarms 8 bis an die Stelle 14, wo er in das dotierte Silizium 11 eingeleitet wird. Von dort fließt der Strom durch den Balken 6 bis an dessen freies Ende, wo er wieder in die Metallschicht 13 eintritt und zu der Kontaktfläche 16 fließt.

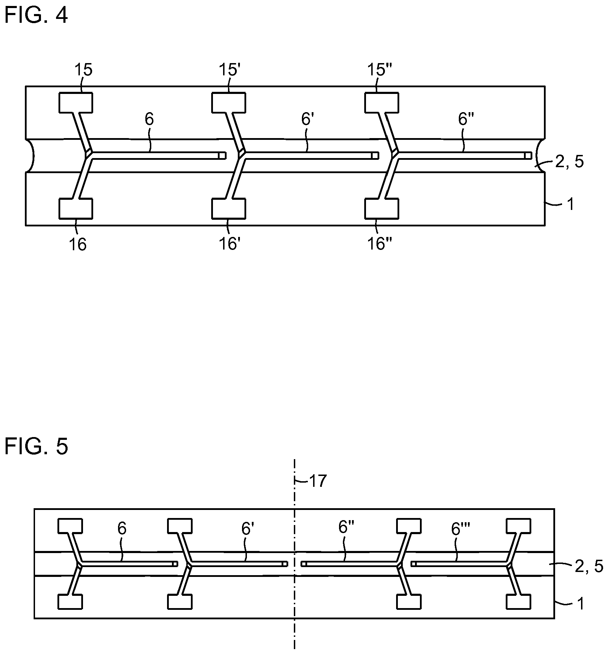

Figur 4 zeigt ein Ausführungsbeispiel des erfindungsgemäßen Wärmeleitfähigkeitsdetektors mit drei baugleichen Balken 6, 6', 6", die in Längsrichtung des Kanals 5 unmittelbar hintereinander angeordnet sind. Durch Verbindung der Kontaktflächen nach dem Muster 15-15'-15" und 16-16'-16" können die Balken 6 parallel und durch Verbindung nach dem Muster 16-15' und 16'-15" in Serie geschaltet werden.

Figur 5 zeigt ein Ausführungsbeispiel mit vier baugleichen Balken 6, 6', 6'', 6"', die in Bezug auf eine quer zu dem Kanal 5 verlaufende Achse 17 spiegelsymmetrisch angeordnet sind, so dass der Wärmeleitfähigkeitsdetektor keine Vorzugsrichtung für den Einbau in eine Fluidleitung besitzt.

## Patentansprüche

1. Wärmeleitfähigkeitsdetektor mit einem von einem Fluid durchströmbaren Kanal (5) und mit einem durch einen Heizstrom auf Arbeitstemperatur aufheizbaren Heizelement aus dotiertem Silizium, das in der Mitte und sich in Längsrichtung des Kanals (5) erstreckend von einem Fluid umströmbar angeordnet und an einem den Kanal (5) durchquerenden Träger (7) gehalten ist, wobei das Heizelement von einem Balken (6) gebildet ist, **dadurch gekennzeichnet, dass** der Träger (7) beiderseits der Verbindung mit dem Heizelement jeweils einen Trägerarm (8, 9) aufweist, und dass der Balken (6) einseitig an dem Träger (7) gehalten ist, und dass der Balken (6) und der Träger (7) auf einer Seite unter Zwischenlage einer Isolierschicht (12) eine an den Enden der Trägerarme (8, 9) in Kontaktflächen (15, 16) zur Stromzuführung endende Metallschicht (13) tragen, die in einem Bereich (14) eines der Trägerarme (8, 9) unterbrochen ist und dort an der zu dem Trägerarm (8) nahen Seite des Balkens (6) sowie an dem freien Ende des Balkens (6) jeweils durch die Isolierschicht (12) hindurch mit dem dotierten Silizium (11) kontaktiert ist.

2. Wärmeleitfähigkeitsdetektor nach Anspruch 1, **dadurch gekennzeichnet, dass** die Isolierschicht (12) aus Siliziumdioxid besteht.

3. Wärmeleitfähigkeitsdetektor nach Anspruch 1 oder 2, **dadurch gekennzeichnet, dass** die Metallschicht (13) aus Gold besteht.

4. Wärmeleitfähigkeitsdetektor nach einem der vorangehenden Ansprüche, **gekennzeichnet durch** mindestens einen weiteren identisch aufgebauten und gehaltenen Balken (6, 6', 6", 6"'), der in Längsrichtung des Kanals (5) unmittelbar vor oder hinter dem einen Balken (6) angeordnet ist.

5. Wärmeleitfähigkeitsdetektor nach Anspruch 4, **dadurch gekennzeichnet, dass** bei einer geraden Anzahl von Balken (6, 6', 6", 6"') deren Anordnung in Bezug auf eine quer zu dem Kanal (5) verlaufende Achse (17) spiegelsymmetrisch ist.

6. Wärmeleitfähigkeitsdetektor nach Anspruch 4 oder 5, **dadurch gekennzeichnet, dass** die von den Balken (6, 6', 6", 6"') und den von ihnen getragenen Metallschichten gebildeten Heizschleifen elektrisch parallel geschaltet sind.

7. Wärmeleitfähigkeitsdetektor nach Anspruch 4 oder 5, **dadurch gekennzeichnet, dass** die von den Balken (6, 6', 6", 6"') und den von ihnen getragenen Metallschichten gebildeten Heizschleifen elektrisch in Serie geschaltet sind.

## Claims

1. Thermal conductivity detector with a channel (5) through which a fluid can flow and with a heating element made of doped silicon which can be heated to operating temperature by a filament current, which heating element is arranged in the centre and extends in the longitudinal direction of the channel (5) such that it can be flowed around by a fluid and is supported on a support (7) traversing the channel (5), wherein the heating element is formed by a bar (6), **characterised in that** the support (7) has a support arm (8, 9) on each of the two sides of the connection with the heating element and that the bar is supported unilaterally on the support (7), and that the bar (6) and the support (7) on one side under an intermediate layer of an insulating layer (12) support a metal layer (13) ending at the ends of the support arms (8, 9) in contact surfaces (15, 16) for power supply, which metal layer (13) is interrupted in one region (14) of one of the support arms (8, 9) and is in contact there with the doped silicon (11) through the insulating layer (12) on the side of the bar (6) next to the support arm (8) and at the free end of the bar (6) respectively.

2. Thermal conductivity detector according to claim 1, **characterised in that** the insulating layer (12) is made of silicon dioxide.

3. Thermal conductivity detector according to claim 1 or 2, **characterised in that** the metal layer (13) is made of gold.

4. Thermal conductivity detector according to one of the preceding claims, **characterised by** at least one further identically structured and supported bar (6, 6', 6'', 6"') which is arranged immediately before or after the first bar (6) in the longitudinal direction of the channel (5).

5. Thermal conductivity detector according to claim 4, **characterised in that** with an even number of bars (6, 6', 6", 6"') its arrangement is in a mirror image in relation to an axis (17) running across the channel (5).

6. Thermal conductivity detector according to claim 4 or 5, **characterised in that** the heating elements formed by the bars (6, 6', 6'', 6"') and the metal layers supported thereby are connected electrically in parallel.

7. Thermal conductivity detector according to claim 4 or 5, **characterised in that** the heating elements formed by the bars (6, 6', 6'', 6"') and the metal layers supported thereby are connected electrically in series.

## Revendications

1. Détecteur de conductibilité thermique comprenant un conduit (5), dans lequel peut passer un fluide, et un élément chauffant en silicium dopé, pouvant être porté à une température de travail par un courant électrique de chauffage, s'étendant au milieu et dans la direction longitudinal du conduit (5), autour duquel un fluide peut passer et retenu à un support (7) traversant le conduit (5), l'élément chauffant étant formé d'une barre (6), **caractérisé en ce que** le support (7) a, de part et d'autre de la liaison avec l'élément chauffant, respectivement un bras (8, 9) de support, et la barre (6) est retenue d'un côté au support (7) et **en ce que** la barre (6) et le support (7) portent d'un côté, avec interposition d'une couche (12) isolante, une couche (13) métallique se terminant, pour la conduite du courant électrique, en des surfaces (15, 16) de contact aux extrémités des bras (8, 9) du support, couche qui est interrompue dans une partie de l'un des bras (8, 9) du support et y est en contact avec le silicium (11) dopé à travers la couche (12) isolante, du côté, proche du bras (8) du support, de la barre (6) ainsi qu'à l'extrémité libre de la barre (6).

2. Détecteur de conductibilité thermique suivant la revendication 1, **caractérisé en ce que** la couche (12) isolante est en dioxyde de silicium.

3. Détecteur de conductibilité thermique suivant la revendication 1 ou 2, **caractérisé en ce que** la couche (13) métallique est en or.

4. Détecteur de conductibilité thermique suivant l'une des revendications précédentes, **caractérisé par** au moins une autre barre (6, 6', 6", 6"'), constituée et maintenue de la même façon, qui est disposée dans la direction longitudinale du conduit (5) juste avant ou après la barre (6).

5. Détecteur de conductibilité thermique suivant la revendication 4, **caractérisé en ce que**, pour un nombre pair de barres (6, 6', 6", 6"'), leur agencement est symétrique, comme en un miroir, par rapport à un axe (17) s'étendant transversalement au conduit (5).

6. Détecteur de conductibilité thermique suivant la revendication 4 ou 5, **caractérisé en ce que** les boucles de chauffage, formées par les barres (6, 6', 6", 6'") et les couches métalliques qu'elles portent, sont montées électriquement en parallèle.

7. Détecteur de conductibilité thermique suivant la revendication 4 ou 5, **caractérisé en ce que** les boucles de chauffage, formées par les barres (6, 6', 6", 6"') et par les couches métalliques qu'elles portent, sont montées électriquement en série.
